(19) Europäisches Patentamt
European Patent Office
Office européen des brevets

(11) **EP 4 542 468 A1**

(12) **EUROPEAN PATENT APPLICATION**
published in accordance with Art. 153(4) EPC

(43) Date of publication:
**23.04.2025 Bulletin 2025/17**

(21) Application number: 23823030.4

(22) Date of filing: **08.06.2023**

(51) International Patent Classification (IPC):
***G06Q 10/06*** (2023.01)

(86) International application number:
**PCT/CN2023/099249**

(87) International publication number:
**WO 2023/241462 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022   CN 202210693437**

(71) Applicant: **Beijing Youzhuju Network Technology
Co., Ltd.
Beijing 101299 (CN)**

(72) Inventors:
• **TANG, Jinghao
  Beijing 100028 (CN)**

• **YU, Yue
  Beijing 100028 (CN)**
• **XU, Yaqi
  Beijing 100028 (CN)**
• **XU, Xiaofei
  Beijing 100028 (CN)**
• **WEI, Qifan
  Beijing 100028 (CN)**
• **HE, Haiqian
  Beijing 100028 (CN)**

(74) Representative: **Dentons UK and Middle East LLP
One Fleet Place
London EC4M 7WS (GB)**

(54) **METHOD AND APPARATUS FOR TRANSFORMATION EVALUATION, AND DEVICE AND
STORAGE MEDIUM**

(57)    According to embodiments of the present disclosure, a method, device, apparatus and storage medium for conversion evaluation are provided. The method includes causing a first content item related to a first object to be presented at a terminal device corresponding to a content provision platform; in response to determining detection of a click behavior for the first content item, causing an assistant content item related to the first object to be presented at the terminal device, the assistant content item at least indicating an entry for performing a conversion behavior for the first object; and determining first expected conversion information for the first content item based on click feedback for the entry, the click feedback indicating whether the entry is clicked at the terminal device, the first expected conversion information indicating a probability that the conversion behavior for the first object is expected to be performed. According to the solution, the expected conversion information for the content item can be effectively estimated without relying on conversion return information provided outside the content provision platform.

FIG. 2

EP 4 542 468 A1

## Description

This application claims priority to Chinese Patent Invention Application No. 202210693437.2, filed June 17, 2022, entitled "METHOD, APPARATUS, DEVICE, AND STORAGE MEDIUM FOR CONVERSION EVALUATION".

## FIELD

Example embodiments of the present disclosure generally relate to the field of computer technologies, and in particular, to a method, apparatus, device, and computer-readable storage medium for conversion evaluation.

## BACKGROUND

The Internet offers access to a wide variety of content. For example, various images, audio, video, web pages and the like may be accessed through the Internet. In addition, accessible content also includes specific content items related to various object, such as advertisements. Such content items are typically provided by the object provider after negotiation with the content provider, and the object provider may also pay the content provider based on the access situation of the content items. Thus, it is often desirable to measure metrics related to presentation of content items, including conversions of content items, where "conversions" represent downloads, registrations, purchases, or other information demand behaviors that occur due to the affection of the presented content items.

## SUMMARY

In a first aspect of the present disclosure, a method for conversion evaluation is provided. The method includes: causing a first content item related to a first object to be presented at a terminal device corresponding to a content provision platform; in response to determining detection of a click behavior for the first content item, causing an assistant content item related to the first object to be presented at the terminal device, the assistant content item at least indicating an entry for performing a conversion behavior for the first object; and determining first expected conversion information for the first content item based on click feedback for the entry, the click feedback indicating whether the entry is clicked at the terminal device, the first expected conversion information indicating a probability that the conversion behavior for the first object is expected to be performed.

In a second aspect of the present disclosure, a method for conversion evaluation is provided. The method includes: presenting, at a terminal device corresponding to a content provision platform, a first content item related to a first object; in response to detecting a click behavior for the first content item, presenting an assistant content item related to the first object, the assistant content item at least indicating an entry for performing a conversion behavior for the first object; and providing click feedback for the entry to a content management system, the click feedback indicating whether the entry is clicked at the terminal device.

In a third aspect of the present disclosure, an apparatus for conversion evaluation is provided. The apparatus includes: a first presentation controlling module configured to cause a first content item related to a first object to be presented at a terminal device corresponding to a content provision platform; a second presentation controlling module configured to cause, in response to determining detection of a click behavior for the first content item, an assistant content item related to the first object to be presented at the terminal device, the assistant content item at least indicating an entry for performing a conversion behavior for the first object; and a conversion determining module configured to determine first expected conversion information for the first content item based on click feedback for the entry, the click feedback indicating whether the entry is clicked at the terminal device, the first expected conversion information indicating a probability that the conversion behavior for the first object is expected to be performed.

In a fourth aspect of the present disclosure, an apparatus for conversion evaluation is provided. The apparatus includes: a first presenting module configured to present, at a terminal device corresponding to a content provision platform, a first content item related to a first object; a second presenting module configured to present, in response to detecting a click behavior for the first content item, an assistant content item related to the first object, the assistant content item at least indicating an entry for performing a conversion behavior for the first object; and a feedback providing module configured to provide click feedback for the entry to a content management system, the click feedback indicating whether the entry is clicked at the terminal device.

In a fifth aspect of the present disclosure, an electronic device is provided. The device includes at least one processing unit; and at least one memory, the at least one memory being coupled to the at least one processing unit and storing instructions for execution by the at least one processing unit, the instructions, when executed by the at least one processing unit, cause the device to implement the method of the first aspect or the second aspect.

In a sixth aspect of the present disclosure, a computer-readable storage medium is provided. The medium having a computer program stored thereon, and the computer program, when executed by a processor, implements the method of the first aspect or the second aspect.

It shall be understood that the content described in this section is not intended to limit critical features or essential features of the embodiments of the disclosure, nor is it intended to limit the scope of the disclosure. Other features of the present disclosure will become readily appreciated from the following description.

## BRIEF DESCRIPTION OF DRAWINGS

The above and other features, advantages, and aspects of various embodiments of the present disclosure will become more apparent with reference to the following detailed description in conjunction with the accompanying drawings. In the drawings, the same or similar reference numerals denote the same or similar elements, wherein:

FIG. 1 illustrates a schematic diagram of an example environment in which embodiments of the present disclosure can be implemented;
FIG. 2 illustrates a flowchart of a signaling flow for conversion evaluation according to some embodiments of the present disclosure;
FIG. 3A to FIG. 3D illustrate schematic diagrams of a presentation interface related to a content item according to some embodiments of the present disclosure;
FIG. 4 illustrates a block diagram of an example structure of a content management system according to some embodiments of the present disclosure;
FIG. 5 illustrates a block diagram of an example structure of a conversion prediction model according to some embodiments of the present disclosure;
FIG. 6 illustrates a block diagram of an example architecture for training a damage prediction model according to some embodiments of the present disclosure;
FIG. 7 illustrates a flowchart of a process for conversion evaluation performed at a content management system according to some embodiments of the present disclosure;
FIG. 8 illustrates a flowchart of a process for conversion evaluation performed at a terminal device according to some embodiments of the present disclosure;
FIG. 9 illustrates a block diagram of an apparatus for conversion evaluation according to some embodiments of the present disclosure;
FIG. 10 illustrates a block diagram of an apparatus for conversion evaluation according to some other embodiments of the present disclosure; and
FIG. 11 illustrates an electronic device in which one or more embodiments of the present disclosure may be implemented.

## DETAILED DESCRIPTION

The following will describe the embodiments of the present disclosure in more detail with reference to the accompanying drawings. Although some embodiments of the present disclosure are shown in the drawings, it should be understood that the present disclosure can be implemented in various forms and should not be construed as limited to the embodiments set forth herein. On the contrary, these embodiments are provided for a more thorough and complete understanding of the present disclosure. It should be understood that the drawings and embodiments of the present disclosure are provided for illustrative purposes only and are not intended to limit the scope of protection of the present disclosure.

In the description of the embodiments of the present disclosure, the term "including" and the like should be understood as non-exclusive inclusion, that is, "including but not limited to". The term "based on" should be understood as "based at least in part on. " The term "one embodiment" or "the embodiment" should be understood as "at least one embodiment". The term "some embodiments" should be understood as "at least some embodiments". Other explicit and implicit definitions may also be included below. As used herein, the term "model" may denote an association relationship between respective data. The association relationship may be obtained, for example, based on a variety of technical solutions that are currently known and/or will be developed in the future.

It will be appreciated that the data involved in the technical solution (including but not limited to the data itself, the obtaining or use of the data) should comply with the requirements of the corresponding legal regulations and related provisions.

It will be appreciated that, before using the technical solutions disclosed in the various embodiments of the present disclosure, the user shall be informed of the type, application scope, and application scenario of the personal information involved in this disclosure in an appropriate manner and the user's authorization shall be obtained, in accordance with relevant laws and regulations.

For example, in response to receiving an active request from a user, prompt information is sent to the user to explicitly prompt the user that an operation requested by the user will require obtaining and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, in response to receiving an active request from the user, prompt information is sent to the user, for example, in the form of a pop-up window, and the pop-up window may present the prompt information in the form of text. In addition, the pop-up window may also carry a selection control for the user to select whether he/she "agrees" or "disagrees" to provide personal information to the electronic device.

It can be understood that the above notification and user authorization process are only illustrative which do not limit the implementation of this disclosure. Other methods that meet relevant laws and regulations can also be applied to the implementation of this disclosure.

As used herein, the term "model" may learn association between corresponding inputs and outputs from training data, so that after the training is complete, a corresponding output may be generated for a given input. The generation of the model may be based on a machine learning technology. Depth learning is a machine learning algorithm that processes inputs and provides corresponding outputs using a multi-tiered processing unit. A neural network model is one example of a model based on deep learning. Herein, "model" may also be referred to as "machine learning model" "learning model" "machine learning network" or "learning network", which may be used interchangeably herein.

A "neural network" is a machine learning network based on depth learning. A neural network is capable of processing inputs and providing corresponding outputs, which typically include an input layer and an output layer and one or more hidden layers between the input layer and the output layer. Generally, a neural network used in a deep learning application includes a lot of hidden layers, thereby increasing the depth of the network. The various layers of the neural network are connected in sequence such that the output of a previous layer is provided as the input of a subsequent layer, wherein the input layer receives the input of the neural network and the output of the output layer is provided as the final output of the neural network. Each layer of the neural network includes one or more nodes (also referred to as processing nodes or neurons), and each node processes the input from a previous layer.

Generally, machine learning may roughly include three phases, namely a training phase, a testing phase, and an application phase (also referred to as an inference phase). In the training phase, a given model may be trained using a large amount of training data, constantly and iteratively updating parameter values until the model obtains consistent reasoning that meets expected goals from the training data. By training, the model may be considered as being able to learn an association between input and output from training data (also referred to as mappings of input to output). A parameter value of the trained model is determined. In the testing stage, a test input is applied to the trained model, so as to test whether the model can provide a correct output, thereby determining the performance of the model. In the application phase, the model may be configured to process actual input based on the trained parameter value to determine corresponding output.

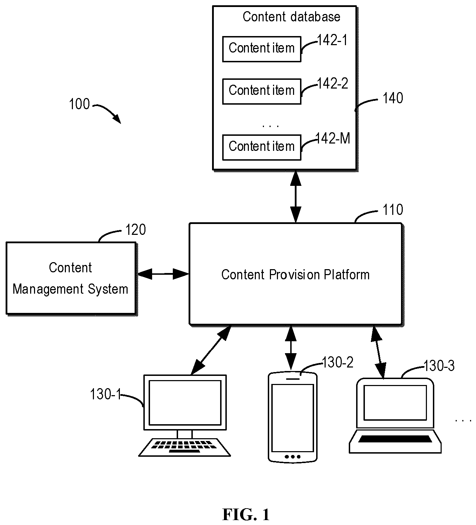

FIG. 1 illustrates a schematic diagram of an example environment 100 in which embodiments of the present disclosure can be implemented. One or more content providers may use the content management system 120 to manage content to be provided on the content provision platform 110. One or more terminal devices 130-1, 130-2, 130-3, etc. (collectively or individually referred to as terminal devices 130 for ease of discussion) are associated with the content provision platform 110 and may access various types of content provided on the content provision platform 110. By way of example, the content provision platform 110 may be an application, a website, a web page, and other accessible resources. The terminal device 130 may be installed with an application for accessing the content provision platform 110, or may access the content provision platform 110 in a suitable manner.

The content provider may provide different content to different terminal devices 130 based on management requirements and based on user operations at the terminal device 130. The content management system 120 may provide the terminal device 130 with one or more specific content items related to one or more objects, such as one or more content items 142-1, 142-2,···, 142-M in the content database 140 (collectively or individually referred to as content items 142 for ease of discussion). These content items may include, for example, advertisements. Object related to the content item include, for example, objects targeted by the advertisement.

In some embodiments, the content management system 120 may determine the content item 142 provided to the one or more terminal devices 130 based at least on a request by the object provider, e.g., based on a bid request of the object provider. In the context of advertisement delivery, an object provider is sometimes also referred to as an advertiser. In some embodiments, the object provider may also pay the content provider based on the presentation of the content items.

In environment 100, the terminal device 110 may be any type of mobile terminal, fixed terminal, or portable terminal, including a mobile phone, desktop computer, laptop computer, notebook computer, netbook computer, tablet computer, media computer, multimedia tablet, personal communication system (PCS) device, personal navigation device, personal digital assistant (PDA), audio/video player, digital camera/camcorder, positioning device, television receiver, radio broadcast receiver, electronic book device, gaming device, or any combination of the foregoing, including accessories and peripherals of these devices, or any combination thereof. In some embodiments, the terminal device 110 can also support any type of interface for a user (such as a "wearable" circuit, etc.). The content management system 120 may be, for example, various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

In a scenario where a content item is provided, there is often a need to measure metrics related to presentation of content items, including conversion of the content items, where "conversion" indicates a download, registration, purchase, or other information demand behavior that occurs due to affection of the presented content item. These metrics may be used to determine a presentation effect of the content item, determine how the content provider charges from the object provider, determine a policy of the content provider for providing the content item between the terminal devices, and/or the like. For example, for advertisements of certain objects, the advertiser may desire to pay the content provider based on the number of times that the conversion behavior of the advertisement occurs.

The conversion of content items typically occurs on platforms other than the content provision platform, such as on a platform managed by the object provider or a third-party platform. For example, a download behavior for a multimedia file may occur in a multimedia file source website; download behaviors for some applications may occur in an application download platform, such as in an application store of the terminal device or in an application download website; and a registration behavior for an application may occur in an application platform, and so on. In this case, the content provider expects the platform managed by the object provider or the third-party platform to feed back conversion of a content item, such as statistical data regarding conversion behavior for the object being performed over a period of time. The platform managed by the object provider or third-party platform feeds back a conversion about the content item, which is also referred to as "conversion return".

In some scenarios, the conversion return may be blocked or delayed for privacy protection considerations. This means that the content provider cannot track in real time whether the conversion behavior for the content item occurs after the content item is presented, so that the conversion of the content item cannot be accurately evaluated. This is not conducive in measuring presentation effect of the content item, and subsequent operations such as payment and supply policy adjustment.

In an example embodiment of the present disclosure, an improved conversion evaluation solution is provided. According to the solution, after a content item related to an object is presented at a terminal device corresponding to a content provision platform, if a click behavior for the content item is detected, instead of directly jumping to another platform that performs the conversion behavior for the object, an assistant content item related to the object continues to be provided. The assistant content item is used to further indicate an entry for performing a conversion behavior for the object. The expected conversion information for the content item is determined based on click feedback for the entry, the information indicating a probability that a conversion behavior for the object is expected to be performed.

According to the solution, the expected conversion information for the content item can be effectively estimated without relying on conversion return information outside of the content provision platform, thus avoiding a situation that conversion evaluation cannot be realized due to conversion return delay or failure in obtaining conversion return caused by various reasons.

Some example embodiments of the present disclosure will be described below with continued reference to the accompanying drawings.

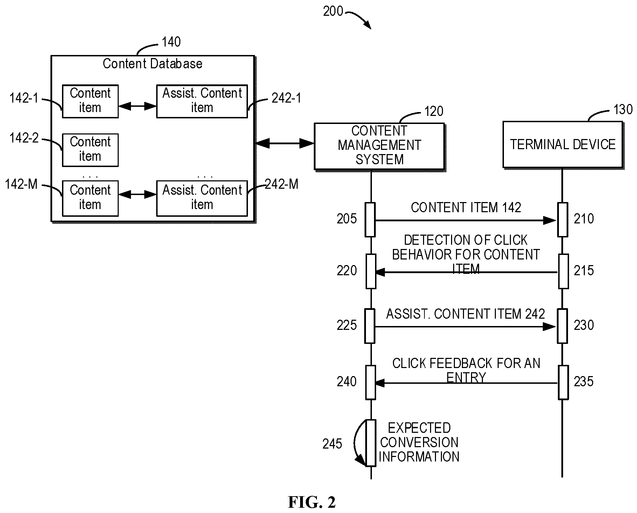

FIG. 2 illustrates a flowchart of a signaling flow 200 for conversion evaluation according to some embodiments of the present disclosure. For ease of discussion, a signaling flow 200 will be described with reference to the environment 100 of FIG. 1. The signaling flow 200 relates to a content management system 120 and a terminal device 130. Although a single terminal device 130 is shown in FIG. 2, the content management system 120 may perform similar signaling flows with multiple terminal devices 130.

In the signaling flow 200, the content management system 120 causes 205 a content item 142 related to an object to be presented at the terminal device 130 corresponding to the content provision platform 110. The terminal device 130 presents 210 a corresponding content item 142, for example, presents the corresponding content item on a user interface corresponding to the content provision platform.

The content management system 120 can determine how and when to cause the content item to be presented based on various policies and triggering conditions for the content item 142. In some embodiments, the content management system 120 may also determine to present different content items 142 in content database 140 to different terminal devices 130. In some embodiments, the content management system 120 may control to cause one content item 142 to be presented at multiple terminal devices 132.

During the content item 142 being presented, the terminal device 132 detects a click behavior for the content item 142. If a click behavior for the content item 142 is detected, the terminal device 132 provides 215 feedback to the content management system 120 indicating detection of a click behavior for the content item 142. Thus, the content management system 120 can determine 220 a detection of the click behavior for the content item 142.

In embodiments of the present disclosure, one or more content items 142 in the content database 140 have associated assistant content items. As an example, FIG. 2 illustrates that the content item 142-1 has an associated assistant content item 242-1, the content item 142-M has an associated assistant content item 242-M, and so forth. For ease of discussion, these assistant content items are collectively referred to herein as assistant content items 242. In some embodiments, one or more content items 142 (e.g., content item 142-2) may not have assistant content items, which is not limited in the embodiments of the present disclosure.

In response to detecting a click behavior for the content item 142 at a certain terminal device 120, the content management system 120 causes 225 an assistant content item 242 associated with the object to be presented at the terminal device 130. The terminal device 130 presents 230 the corresponding assistant content item 142, for example, presents the corresponding assistant content item on a user interface corresponding to the content provision platform.

The assistant content item 242 and the associated content item 142 are both associated to the same object. The assistant content item 242 indicates at least an entry for performing a conversion behavior for the object. Clicking the entry may enable the terminal device to access a platform for performing the conversion behavior. In embodiments of the present disclosure, the presentation of an assistant content item may be used to further confirm whether the user intents to perform a conversion behavior for the object. Sometimes, such assistant content items may also be referred to as Generalized or promotional items for advertisements, among others.

In some embodiments, the conversion behavior evaluated based on the assistant content item may be a behavior that may be performed subsequently after the click behavior for the content item. For example, if the object is a downloadable object, the conversion behavior may include a download behavior. If the object is a to-be-paid object, the conversion behavior may include, for example, a purchase behavior. In other embodiments, other conversion behaviors may also be evaluated according to actual needs, such as a registration behavior, a payment behavior, and other information requirement behavior, and so on.

In some embodiments, the assistant content item may also indicate descriptive information related to the object, so as to provide more information related to the object, thereby helping the user determine whether to perform the conversion behavior. For example, if the object is an application that can be downloaded, the descriptive information indicated by the assistant content item may include an icon, a ranking, a page screenshot, a basic introduction, a size of an installation package, and developer information of the application, etc. It should be understood that the descriptive information herein may be configured according to an actual scenario.

In some embodiments, the content management system 120 may determine whether the assistant content item is to be presented at a certain terminal device 130 based at least on a return constraint for the conversion behavior for the object. The return constraints may indicate whether the conversion behavior performed at a certain terminal device 130 will be returned in a delayed way or whether the conversion behavior will be blocked from being returned to the content management system 120. The return constraint may be set due to a privacy protection policy of a platform of the object provider or the third-party platform performing the conversion behavior, or other reasons. The return constraint may be related to a type of the terminal device 120, a platform of an object provider to be accessed by the terminal device 120, a configuration of the third platform, and the like. In one example, if the return constraint indicates that the conversion behavior performed at a certain terminal device 130 will be returned in a delayed way or will be returned to the content management system 120, the content management system 120 may determine that the assistant content item 242 is to be presented.

In addition to the return constraint, the content management system 120 may determine whether to present the assistant content item 242 based on other factors, such as based on a request by the object provider on whether the assistant content item is to be presented, etc. Embodiments of the present disclosure are not limited in this respect.

During presentation of the assistant content item 242, the terminal device 130 detects a click behavior for the entry of the conversion behavior and provides 235 click feedback for the entry to the content management system 120, the click feedback indicating whether the entry is clicked at the terminal device 130. The content management system 120 receives 240 the click feedback. Since the assistant content item 242 is controlled to be presented by the content management system 120 and is presented within the content provision platform, the content management system 120 can receive such feedback information without being constrained by other platforms.

In some embodiments, if the terminal device 130 detects a click behavior for the entry, the click feedback indicating that the entry is clicked may be provided to the content management system 120. In some embodiments, if the terminal device 130 does not detect the click behavior for the entry after presentation of the assistant content item 242 ends, or does not detect the click behavior for the entry for a period of time after the presentation starts, the terminal device 130 may provide to the content management system 120 click feedback indicating that the entry is not clicked. In some embodiments, if the assistant content item 242 is presented at the plurality of terminal devices 130, the content management system 120 may receive, from the plurality of terminal devices 130, feedback information indicating whether the entry in the assistant content item 142 is clicked.

To better understand the example embodiments, the following will be described with reference to the example page.

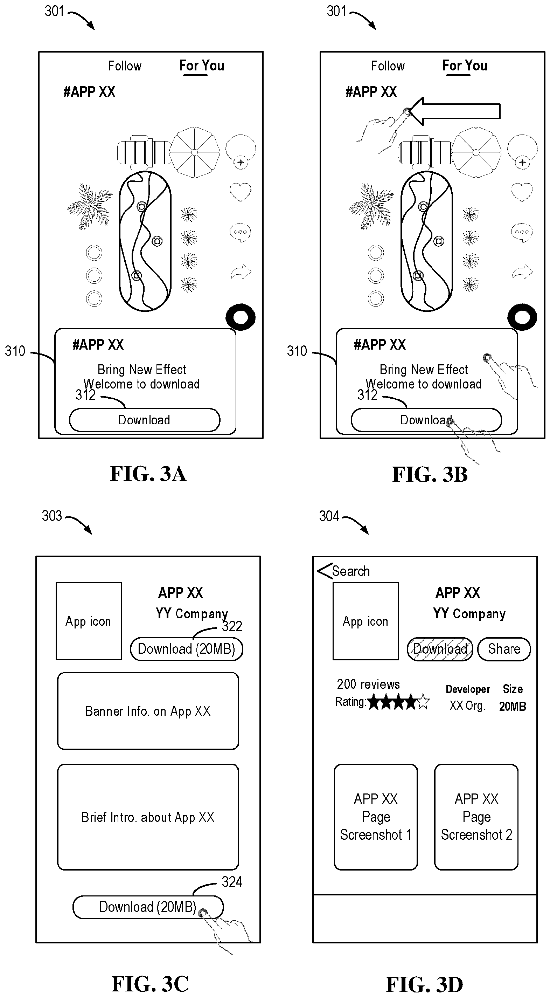

FIG. 3A to FIG. 3C illustrate schematic diagrams of a presentation interface related to a content item according to some embodiments of the present disclosure. FIG. 3A illustrates a user interface 301 for presenting content items. In this example, the user interface 301 is shown as a page of an application running on the terminal device, on which content items (i.e., advertisements) related to an object ("Application XX" in this example) are presented. The user interface 301 also includes a pop-up window 310 that indicates relevant information about "Application XX" and a download identifier 312 that indicates "Application XX".

The terminal device 130 may monitor the click behavior for the content item in the user interface 301. In some embodiments, detection of the click behavior may be determined based on a click operation of the user at one or more locations in the presentation interface of the content item, or other selection operation (e.g., a sliding gesture, a voice control command, etc.). In some embodiments, a click behavior at one or more locations in the user interface 301 may trigger presentation of the assistant content item. As shown in FIG. 3B, if the user clicks a pop-up window 310 in the user interface 301, clicks the download identifier 312, or performs the sliding gesture in a predetermined direction in the page, it may be determined that the click behavior for the content item is performed.

In response to detecting the click behavior for the content item, a user interface 303 as shown in FIG. 3C is presented on the terminal device 130, which presents an assistant content item related to "Application XX". Specifically, the user interface 303 further indicates a download entry for "Application XX", such as download identifiers 322, 324, etc. The user interface 303 also indicates descriptive information of the "Application XX", such as an application icon, development company, banner information, brief introduction, and installation package size for "Application XX", and the like.

If a click behavior for the entry is detected, for example, if a click operation on the download identifiers 322 and 324 is detected, the terminal device 130 may provide click feedback to the content management system 120 indicating that the entry is clicked. In some examples, in addition to the download identifiers 322, 324, one or more other locations in the user interface 303 may also be configured as entries of conversion behavior for the object. This may be configured according to actual needs, and embodiments of the present disclosure are not limited in this respect.

In some embodiments, if an entry indicated by the assistant content item 242 is clicked, the terminal device 130 may also access or jump to a platform for performing the conversion behavior for the object. FIG. 3D illustrates a user interface 304 for performing a conversion behavior for an object, and the user interface is a download interface of the application XX. In this interface, the user may perform the download behavior as needed.

It shall be understood that the user interfaces shown in FIGS. 3A-3D are merely examples, and various interface designs may actually exist. Individual graphical elements in the interface may have different arrangements and different visual representations, in which one or more of the elements may be omitted or replaced, and one or more other elements may also exist. Embodiments of the present disclosure are not limited in this respect.

With continued reference back to FIG. 2, by providing the assistant content item, the content management system 120 may collect click feedback for entry of the conversion behavior from the terminal device 130. Further, the content management system 120 determines 245 expected conversion information for the content item based on click feedback for the entry and the expected conversion information indicates a probability that the conversion behavior for the object is expected to be performed.

The presentation of content item 142 may be referred to as a presentation or impression of a content item, such as a user interface 301 presented in FIG. 3A. In evaluation for the content item 142, the number of times of the content item 142 being presented is also counted, that is, the number of presentations or the number of impressions. The number of presentations of the content item 142 may include one or more presentations on a plurality of terminal devices, and/or one or more presentations on the same terminal device.

In addition, the number of clicks on the presented content item 142 may also be counted, such as the clicks in FIG. 3B. The number of clicks on the content item 142 may include one or more clicks on a plurality of terminal devices, and/or one or more presentations on the same terminal device. In some examples, for a specific content item 142, a probability that a click behavior for the content item 142 is performed may also be determined, which is also referred to as a click through rate (CTR). The click through rate may be determined as a ratio of the number of times that the click behavior of the content item 142 is performed to the number of presentations of the content item 142. For example, if the content item 142 is presented 10,000 times, and the click behavior is detected 8,000 times during these presentations, the click through rate may be determined to be 0.8.

In the conversion evaluation, it is also desirable to evaluate conversion information regarding the conversion behavior for the content item 142 being performed, also known as conversion value rate (CVR). The conversion value rate may be determined as a ratio of the number of times that the conversion behavior of the object is performed to the number of times that the click behavior of the content item 142 is performed. For example, if it is detected that 8,000 click behaviors occur in the 10,000 presentations of the content item, and 6,000 conversion behaviors are detected in a total of 8,000 click behaviors, then the conversion value rate may be determined to be 0.75.

In an embodiment of the present disclosure, it is proposed to evaluate conversion information of a content item based on click feedback for an entry in the assistant content item. In this solution, if a further click on the entry of the conversion behavior for the assistant content item is detected, the probability that the conversion behavior actually occurs may be considered very high. That is, the click behavior on the assistant content item has a strong correlation with the conversion behavior for the object.

The content management system 120 may determine the number of times a click behavior for a particular content item 142 is performed. The statistics herein may be performed across a period of time and a plurality of terminal devices 130. The content management system 120 may also determine, based on click feedback from the terminal device 130, the number of times an entry for a conversion behavior is clicked when the assistant content item 242 is presented, sometimes referred to herein as an intermediate click counts. The content management system 120 may determine the number of clicks on the entry of the conversion behavior indicated by the particular assistant content item 242 across a period of time and the plurality of terminal devices 130.

In some embodiments, considering that the click behavior on the assistant content item has a strong correlation with the conversion behavior for the object, the content management system 130 may approximate the number of clicks on the entry of the conversion behavior as the number of times the conversion behavior is performed, that is, the number of times that the conversion behavior for the object is "expected" to be performed. The content management system 130 may determine expected conversion information for the content item 142 based on the above, to indicate a probability that the conversion behavior is expected to occur when the content item 142 is clicked. For example, the expected conversion information may be determined as a ratio of the number of clicks on the entry of the conversion behavior to the number of clicks on the content item 142. For example, if 8,000 click behaviors occur in 10,000 presentations of a content item, and in the 8,000 click behaviors, 7,000 click behaviors for an entry indicated by the assistant content item are detected, the expected conversion information may be determined to indicate a conversion value rate of 7/8.

The expected conversion information may be used to measure a presentation effect for the content item 142. Since the click behavior on the assistant content item does not completely mean that the conversion behavior for the object actually occurs, for example, the user does not perform the download behavior after jumping to the download interface of FIG. 3D, or jumping to the interface is blocked, there may be some error between the expected conversion information for the content item 142 and the real conversion information of the content item 142. This portion of error is referred to as drop-off information, or drop-off ratio. The drop-off information indicates a probability that the conversion behavior is actually not performed if the expected conversion information indicates that the conversion behavior for the object is expected to be performed. That is, the drop-off information is determined by a part of the statistical data where the conversion behavior is actually not performed after the entry on the assistant content item is clicked. The drop-off ratio (denoted as *drop_ratio*) may be determined by:

$$drop\_ratio = 1 - sum(install\_convert)/sum(middle\_click) \qquad (1)$$

where *sum (install_ convert)* indicates a total number of times the conversion behavior for a particular object is "actually" performed; *sum (middle _ click)* indicates the total number of times the click behavior for the entry is detected on the assistant content item, which is used to represent the total number of times the conversion behavior is "expected" to be performed. In general, if the drop-off ratio *drop _ ratio* is lower, it indicates that the *sum (middle _ click)* is approximately close to true *sum(install_convert)*.

In some embodiments, the content management system 130 may utilize collected expected conversion information to perform more subsequent policies, as well as the computation of other metrics of the content item.

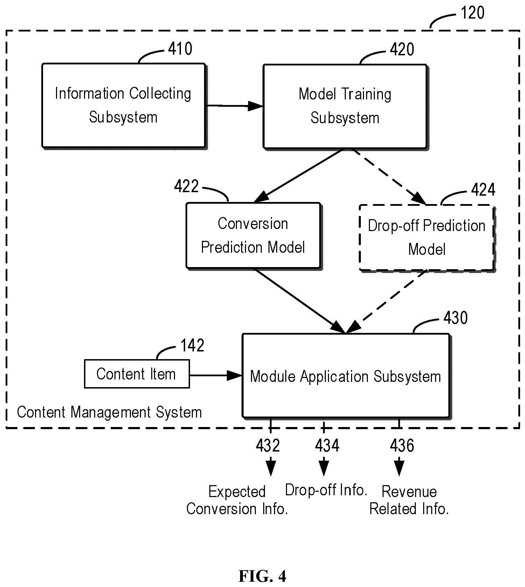

FIG. 4 illustrates an example structure block diagram of a content management system 120 according to some embodiments of the present disclosure. As shown, the content management system 120 may include at least an information collecting subsystem 410, a model training subsystem 420, and a model application subsystem 430.

The information collecting subsystem 410 may be configured to determine expected conversion information for one or more content items 142 in accordance with the processes described with respect to signaling flow 200. These content items 142 have assistant content items 242, so the expected conversion information is determined based on the click behavior detected on the assistant content item 242, as discussed above.

In some embodiments, the model training subsystem 420 is configured to train the conversion prediction model 422 based at least on the collected expected conversion information. The conversion prediction model 422 is configured to predict conversion information for content items related to a given object, such as a probability that conversion behavior for a given object is performed if the content item is presented or clicked.

The trained conversion prediction model 422 is provided to the model application subsystem 430, which is configured to utilize the trained conversion prediction model 422 to predict expected conversion information 432 for a certain content item 412, to indicate a probability that a conversion behavior for an object related to the content item 142 is expected to be performed.

In some embodiments, the model training subsystem 420 is further configured to train at least a drop-off prediction model 424. The drop-off prediction model 424 is configured to determine drop-off information for the content item. The training data for the drop-off prediction model 424 includes at least the true total number of times that the conversion behavior for the corresponding object is actually performed, and the number of times of the click behavior detected on the assistant content item.

The trained drop-off prediction model 424 may be provided to the model application subsystem 430, which is configured to predict drop-off information 434 for a certain content item 412 using the trained drop-off prediction model 424, to indicate a probability that the conversion behavior is actually not performed, when the expected conversion information indicates that a conversion behavior for a related object is expected to be performed.

In some embodiments, if the expected conversion information 432 (represented as *pcvr*) for a certain content item 142 is determined using the trained conversion prediction model 422, and the click behavior for the content item 142 triggers presentation of the assistant content item 242, the drop-off information 434, such as *drop_ratio,* for the content item 142 may be determined based on a trained drop-off prediction model 424. Updated conversion information for the content item 142 may be determined based on the expected conversion information 432 and the drop-off information 434, to indicate a probability that the conversion behavior for the object is actually performed, which may be represented as *cvr=pcvr*\*(1-*drop_ratio*). In the updated conversion information, a portion of statistics data where the conversion behavior is actually not performed is removed.

**In** some embodiments, based on the updated conversion information, the model application subsystem 430 may further determine other information related to the content item 142, such as revenue related information 436. The revenue related information 426 is typically a content item metric of interest to the object provider. The revenue related information 436 may be determined based at least on the conversion information for the content item 142 and conversion bid information for the content item 142.

In some examples, the revenue related information 436 may indicate revenue that can be obtained at a predetermined number of presentations of the content item, e.g., the revenue related information may indicate advertisement revenue that can be obtained per 1,000 times of presentations (i.e. effective cost per mile, ECPM). There may be other metrics for revenue related information 436, and for ease of discussion, the following description will be provided by taking the ECPM as an example. The ECPM may be determined based on:

$$ECPM = bid * pctr * pcvr * (1-drop\_ratio) \qquad (2)$$

where *bid* refers to the object provider's bid for a single conversion behavior for the object, *pctr* indicates an expected click through rate for the related content item, *pcvr* indicates expected conversion information for the content item (e.g., may be expected conversion information 432 determined by the conversion prediction model 422), *drop_ratio* indicates drop-off information for the content item, (e.g., it may be drop-off information 434 determined by the drop-off prediction model 424).

Revenue related information 436, such as ECPM, may be used to determine a bidding strategy for a content item. For example, the bidding strategy may include a lowest cost bidding and a cost cap bidding. The lowest cost bidding scheme is to set a plan budget by the object provider, which achieve a lowest cost bidding product on the premise that the entire budget is consumed as much as possible over a period of time (e.g., one day or before the end of advertisement plan scheduling). The cost cap bidding scheme is to ensure that the actual cost of the content item delivered by the object provider is as close to its bid as possible. For a cost cap bidding scheme, revenue related information needs to be considered in order to accurately determine revenue related to the content item. Of course, the revenue related information 436 may also be used in various scenarios such as other evaluation schemes for content items, or execution of other policies.

The structure of a conversion prediction model 422 and the training process thereof will be introduced first, and then the training process of the drop-off prediction model 424 is introduced.

The conversion prediction model 422 may be constructed based on any suitable machine learning model or neural network model. In some embodiments, due to lack of conversion constraints or other reasons, immediate conversion return of certain content items 142 may be possible, and thus assistant content items for certain content items may not be provided. In some embodiments, it is expected that the conversion prediction model 422 is trained to be applied to both conversion information prediction for such content items 142 and conversion information prediction which requires provision of assistant content items. In this case, the training data of the conversion prediction model 422 includes expected conversion information determined on the basis of the assistant content item being providing, and conversion information determined without providing the assistant content item. The latter conversion information indicates the probability that the conversion behavior of the corresponding object is performed, which may be obtained directly by return from a platform other than the content provision platform (the platform performing the conversion behavior). The platform for performing the conversion behavior may be, for example, a platform managed by the object provider or a third-party platform.

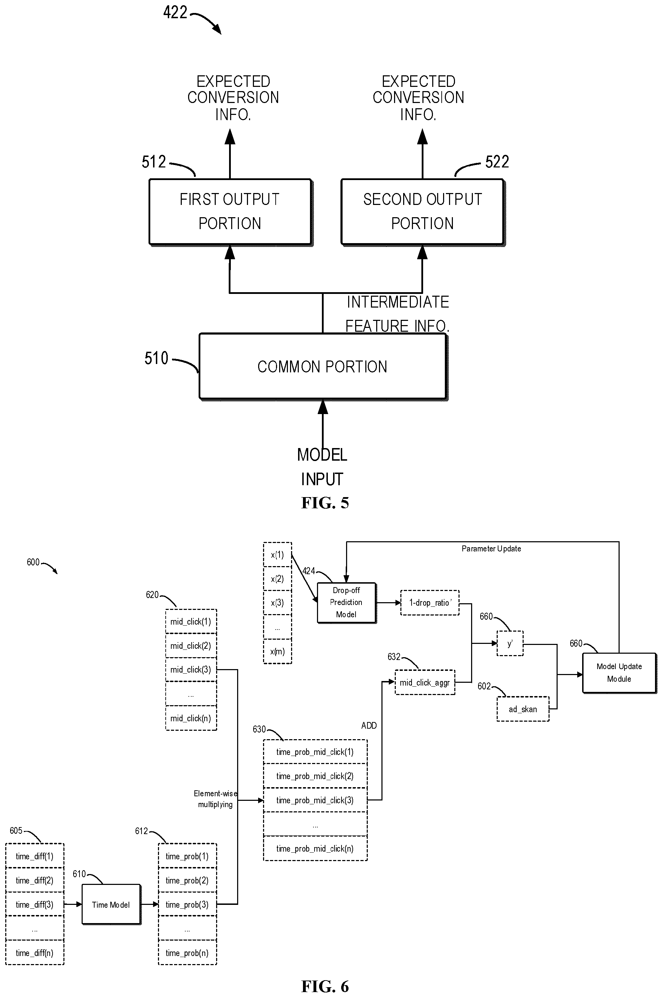

In some embodiments, to enable the conversion prediction model 422 to provide more accurate prediction for different types of content items, the conversion prediction model 422 may be constructed to determine expected conversion information for different types of content items by utilizing different output portions. FIG. 5 illustrates an example structure block diagram of a conversion prediction model 422 according to such embodiments. As shown in FIG.

5, the conversion prediction model 422 includes a common portion 510, a first output portion 512, and a second output portion 514. The common portion 510 serves as a shared base portion of the first output portion 512 and the second output portion 514, which receives model inputs and processes the model inputs to obtain intermediate feature information. If the model input is related to a content item having an assistant content item, intermediate feature information is provided to the first output portion 512, and the expected conversion information is determined by this portion. If the model input is related to a content item for which an assistant content item does not need to be provided, intermediate feature information is provided to the first output portion 514, and the expected conversion information is determined by this portion.

The model input may include information related to the content item itself, information related to the object of the content item, and other relevant information that can be used to predict the conversion information, which is not limited in the embodiments of the present disclosure.

In a model training phase, the common portion 510 may be trained using expected conversion information related to content items that provide assistant content items and expected conversion information related to content items that do not need to provide assistant content items. That is, the expected conversion information related to the two types of content items can be used to influence parameter updating of the common portion 510. For the first output portion 512, it is trained using the expected conversion information related to the content items providing the assistant content item, while for the second output portion 514, it is trained using the expected conversion information related to the content item that does not need to provide the assistant content item. This may enable the first output portion 512 and the second output portion 514 to each be dedicated to conversion information prediction for corresponding types of content items.

An example structure of the conversion prediction model 422 is described with reference to FIG. 5. In other embodiments, instead of designing a plurality of output portions, the conversion prediction model 422 may be trained using the expected conversion information corresponding to the two types of content items. According to actual needs, in some embodiments, for two types of content items, two conversion prediction model may also be separately designed for prediction of conversion information.

Training data for the drop-off prediction model 424 includes at least the true total number of times the conversion behavior for the corresponding object is actually performed. However, in many cases, the true total number of times the conversion behavior is actually performed may be delayed for a period of time and then provided to the content management system 120 by other platforms. For example, to prevent being tracked, the return time for each conversion behavior may be random. But typically, after a longer period of time, the conversion behavior that occurs over the period of time may have been returned to the content management system 120. In addition, the inventors have also found that the delay time of the overall return follows a fixed distribution. Therefore, in some embodiments, an improved training method for training the drop-off prediction model 424 is proposed.

FIG. 6 illustrates a block diagram of an example architecture 600 for training a drop-off prediction model 424, in accordance with some embodiments of the present disclosure. The content items targeted by training of the drop-off prediction model 424 have associated assistant content items.

In the embodiment of FIG. 6, the drop-off prediction model 424 is trained considering one or more content items $x(1), x(2), x(3), ...... x(m)$. For each content item, it is assumed that the true total number of times 602 (denoted as *ad_skin*) the conversion behavior for the object related to the content item is actually performed over a time period may be determined, for example, based on one or more conversion returns. In addition, a plurality of the number of times 620, denoted as *mid_click (1), mid_click (2), mid_click (3),··· mid_click (n),* that the click behavior for the entry indicated by the assistant content item 242 is performed at a plurality of time points (denoted as 1, 2, 3,··· n) within the time period may be obtained.

In an architecture 600, the time model 610 is configured as a plurality of conversion return probabilities 612 corresponding to a plurality of time points, denoted as *time _prob (1), time_ prob (2), time_ prob (3),··· , time_ prob (n),* each of which indicates a probability that the number of times a conversion behavior for an object is performed at a corresponding time point has been returned at a time point *n.* The input to the time model 610 is temporal difference information 605, denoted as *time_diff (1), time_diff (2), time_diff (3),* which is configured to represent each of specific time point.

The total number of times 632 the conversion behavior for the object is expected to be performed over a time period is determined based on the plurality of the number of times and the plurality of conversion return probabilities, and it may be represented as *mid_click_aggr. The mid_click_aggr may be determined, for example, by element-wise multiplying mid_click (1), mid_click (2), mid_click (3), ... mid_click (n) with time_prob (1), time_prob (2), time_prob (3), ... time_prob* (n) and then summing the result of the multiplication together.

In each iteration of training, the drop-off prediction model 424 utilizes current model parameter values to determine certain drop-off information drop_ratio' for a corresponding content item (e.g., certain content item in $x(1), x(2), x(3), ...... x(m)$). Based on *mid_click_aggr* and (1-drop_ratio'), a predicted total number of times 660 y' the conversion behavior for the related object is actually performed over a time range from time points 1 to n can be determined, that is y' = mid_click_aggr * (1-drop_ratio').

During training, the model update module 660 in the model training subsystem 420 may determine a difference between the predicted total number of times 660y' and the true total number of times 602 *ad_skan,* and update the drop-off prediction model 424 based on the difference, such as updating a parameter value of the drop-off prediction model 424. In some embodiments, the model update module 660 may construct a loss function based on the difference between the predicted total number of times 660y' and the true total number of times 602 *ad_skan,* and determine an update for the drop-off prediction model 424 using an appropriate model training algorithm based on the loss function. Embodiments of the present disclosure are not limited in terms of model training algorithms.

For each content item *x(1), x(2), x(3), ...... x(m),* the difference between the predicted total number of times 660y' and the true total number of times 602 *ad_skan* may be determined according to the above steps, so as to update the drop-off prediction model. The drop-off prediction model 424 may be updated to constantly reduce or minimize the difference between the predicted total number of times 660y' and the true total number of times 602 *ad_skan* until the purpose of model training is realized.

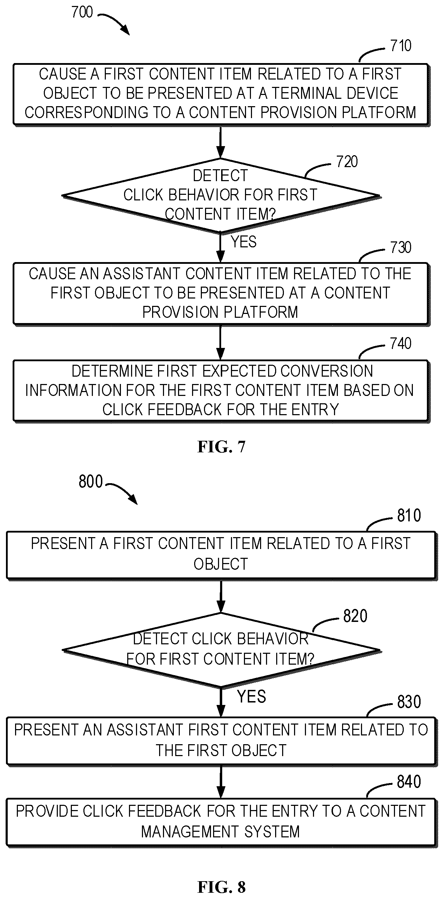

FIG. 7 illustrates a flowchart of a process 700 for conversion evaluation performed at the content management system 120, in accordance with some embodiments of the present disclosure.

At block 710, the content management system 120 causes a first content item related to a first object to be presented at a terminal device corresponding to a content provision platform. At block 720, the content management system 120 determines whether a click behavior for the first content item is detected. At block 730, in response to determining detection of a click behavior for the first content item, the content management system 120 causes an assistant content item related to the first object to be presented at the terminal device, the assistant content item at least indicating an entry for performing a conversion behavior for the first object. At block 740, first expected conversion information for the first content item is determined based on click feedback for the portal, the click feedback indicating whether the entry is clicked at the terminal device, the first expected conversion information indicating a probability that the conversion behavior for the first object is expected to be performed.

In some embodiments, the conversion behavior includes a download behavior on the first object.

In some embodiments, the assistant content item further indicates descriptive information related to the first object.

In some embodiments, causing the assistant content item to be presented includes: determining whether the assistant content item is to be presented at the terminal device based at least on a return constraint for the conversion behavior for the first object; and selectively causing the assistant content item to be presented based on the determination.

In some embodiments, the process 700 further includes training a conversion prediction model based at least on the first expected conversion information, the conversion prediction model being trained to predict conversion information for a content item related to a given object.

In some embodiments, training the conversion prediction model includes: obtaining second expected conversion information for a second content item, the second content item being related to a second object, and the second expected conversion information being determined based on a probability that the conversion behavior for the second object is performed, and the probability being obtained from a platform other than the content provision platform; training a common portion of the conversion prediction model based on the first expected conversion information and the second expected conversion information; training a first output portion of the conversion prediction model based on an intermediate output of the common portion and the first expected conversion information; and training a second output portion of the conversion prediction model based on the intermediate output of the common portion and the second expected conversion information.

In some embodiments, the process 700 further includes predicting a third expected conversion information for a third content item using the trained conversion prediction model, the third content item being related to a third object, the third expected conversion information indicating a probability that the conversion behavior for the third object is expected to be performed.

In some embodiments, an additional assistant content item is presented in response to detecting a click behavior for the third content item. In some embodiments, the process 700 further includes: obtaining drop-off information for the third content item, the drop-off information indicating a probability that the conversion behavior is actually not performed when the third expected conversion information indicates that the conversion behavior for the third object is expected to be performed; and determining updated conversion information for the third content item based on the third expected conversion information and the drop-off information, the updated conversion information indicating a probability that the conversion behavior for the third object is actually performed.

In some embodiments, the process 700 further includes determining revenue related information for the third content item based on the updated conversion information and conversion bid information for the third content item, the conversion bid information indicating a bid for a single conversion behavior for the third object.

In some embodiments, obtaining the drop-off information includes: obtaining a trained drop-off prediction model; and determining the drop-off information for the third content item using the drop-off prediction model.

In some embodiments, the process 700 further includes training the drop-off prediction model by: determining a total number of times a conversion behavior for a fourth object is expected to be performed within a time period when a fourth content item related to the fourth object is presented; determining expected drop-off information for the fourth content item using a to-be-trained drop-off prediction model; determining, based on the expected drop-off information and the total number of times, a predicted total number of times that the conversion behavior for the fourth object is actually performed within the time period; and updating the drop-off prediction model based on a difference between the predicted total number of times and an actual total number of times that the conversion behavior for the fourth object is actually performed within the time period.

In some embodiments, additional assistant content items are presented upon detecting a click behavior for the fourth content item. In some embodiments, determining the total number of times the conversion behavior for the fourth object is expected to be performed within the time period includes: obtaining a plurality of times that a click behavior for an entry indicated by the additional assistant content item is performed at a plurality of time points within the time range; determining a plurality of conversion return probabilities corresponding to the plurality of time points, a conversion return probability indicating a probability that the number of times the conversion behavior for the fourth object is performed at a corresponding time point has been returned at a latest time point among the plurality of time points; and determining the total number of times the conversion behavior for the fourth object is expected to be performed within the time period based on the plurality of times and the plurality of conversion return probabilities.

FIG. 8 illustrates a flowchart of a process 800 for conversion evaluation performed at a terminal device 140 according to some embodiments of the present disclosure.

At block 810, the terminal device 140 presents, at a terminal device corresponding to a content provision platform, a first content item related to a first object. At block 820, the terminal device 140 determines whether a click behavior for the first content item is detected. In response to detecting a click behavior for the first content item, at block 830, the terminal device 140 presents an assistant content item related to the first object, the assistant content item at least indicating an entry for performing a conversion behavior for the first object. At block 840, the terminal device 140 provides click feedback for the entry to a content management system, the click feedback indicating whether the entry is clicked at the terminal device.

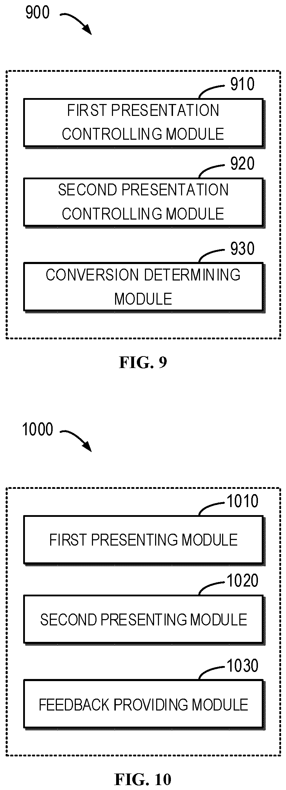

FIG. 9 illustrates a schematic structural block diagram of an apparatus 800 for conversion evaluation according to some embodiments of the present disclosure. The apparatus 900 may be implemented or included in the content management system 120. The various modules/components in the apparatus 900 may be implemented by hardware, software, firmware, or any combination thereof.

As shown, the apparatus 900 includes a first presentation controlling module 910 configured to cause a first content item related to a first object to be presented at a terminal device corresponding to a content provision platform, and the apparatus 900 further includes a second presentation controlling module 920 configured to cause, in response to determining detection of a click behavior for the first content item, an assistant content item related to the first object to be presented at the terminal device, the assistant content item at least indicating an entry for performing a conversion behavior for the first object. The apparatus 900 further includes a conversion determining module 930 configured to determine first expected conversion information for the first content item based on click feedback for the entry, the click feedback indicating whether the entry is clicked at the terminal device, the first expected conversion information indicating a probability that the conversion behavior for the first object is expected to be performed.

In some embodiments, the conversion behavior includes a download behavior on the first object.

In some embodiments, the assistant content item further indicates descriptive information related to the first object.

In some embodiments, the second presentation controlling module 920 includes: a determining module configured to determine whether the assistant content item is to be presented at the terminal device based at least on a return constraint for the conversion behavior for the first object; and a selective presenting module configured to selectively cause the assistant content item to be presented based on the determination.

In some embodiments, the apparatus 900 further includes: a first training module configured to train a conversion prediction model based at least on the first expected conversion information, the conversion prediction model being trained to predict conversion information for a content item related to a given object.

In some embodiments, the first training model includes: an information obtaining module configured to obtain second expected conversion information for a second content item, the second content item being related to a second object, and the second expected conversion information being determined based on a probability that the conversion behavior for the second object is performed, and the probability being obtained from a platform other than the content provision platform; a common portion training module configured to train a common portion of the conversion prediction model based on the first expected conversion information and the second expected conversion information; a first output portion training module configured to train a first output portion of the conversion prediction model based on an intermediate output of the common portion and the first expected conversion information; and a second output portion training module configured to train a second output portion of the conversion prediction model based on the intermediate output of the common portion and the second expected conversion information.

In some embodiments, the apparatus 900 further includes: a first model application module configured to predict a third expected conversion information for a third content item using the trained conversion prediction model, the third content item being related to a third object, the third expected conversion information indicating a probability that the conversion behavior for the third object is expected to be performed.

In some embodiments, an additional assistant content item is presented in response to detecting a click behavior for the third content item. In some embodiments, the apparatus 900 further includes an drop-off obtaining module configured to obtain drop-off information for the third content item, the drop-off information indicating a probability that the conversion behavior is actually not performed when the third expected conversion information indicates that the conversion behavior for the third object is expected to be performed; and a conversion updating module configured to determine updated conversion information for the third content item based on the third expected conversion information and the drop-off information, the updated conversion information indicating a probability that the conversion behavior for the third object is actually performed.

In some embodiments, the apparatus 900 further includes a revenue determining module configured to determine revenue related information for the third content item based on the updated conversion information and conversion bid information for the third content item, the conversion bid information indicating a bid for a single conversion behavior for the third object.

In some embodiments, the drop-off obtaining module includes: a model obtaining module configured to obtain a trained drop-off prediction model; and a second model application module configured to determine the drop-off information for the third content item using the drop-off prediction model.

In some embodiments, the apparatus 900 further includes a second model training module configured to train the damage prediction model by: determining a total number of times a conversion behavior for a fourth object is expected to be performed within a time period when a fourth content item related to the fourth object is presented; determining expected drop-off information for the fourth content item using a to-be-trained drop-off prediction model; determining, based on the expected drop-off information and the total number of times, a predicted total number of times that the conversion behavior for the fourth object is actually performed within the time period; and updating the drop-off prediction model based on a difference between the predicted total number of times and an actual total number of times that the conversion behavior for the fourth object is actually performed within the time period.

In some embodiments, an additional assistant content item is presented in response to detecting a click behavior for the fourth content item. In some embodiments, the second model training module is configured to determine total number of times the conversion behavior for the fourth object is expected to be performed within the time period by: obtaining a plurality of times that a click behavior for an entry indicated by the additional assistant content item is performed at a plurality of time points within the time range; determining a plurality of conversion return probabilities corresponding to the plurality of time points, a conversion return probability indicating a probability that the number of times the conversion behavior for the fourth object is performed at a corresponding time point has been returned at a latest time point among the plurality of time points; and determining the total number of times the conversion behavior for the fourth object is expected to be performed within the time period based on the plurality of times and the plurality of conversion return probabilities.

FIG. 10 illustrates a block diagram of an apparatus for conversion evaluation according to some other embodiments of the present disclosure. The apparatus 1000 may be implemented or included in the terminal device 140. The various modules/components in the apparatus 1000 may be implemented by hardware, software, firmware, or any combination thereof.

As shown, the apparatus 1000 includes a first presenting module 1010 configured to present, at a terminal device corresponding to a content provision platform, a first content item related to a first object; and a second presenting module 1020 configured to present, in response to detecting a click behavior for the first content item, an assistant content item related to the first object, the assistant content item at least indicating an entry for performing a conversion behavior for the first object. The apparatus 1000 further includes a feedback providing module 1030 configured to provide click feedback for the entry to a content management system, the click feedback indicating whether the entry is clicked at the terminal device.

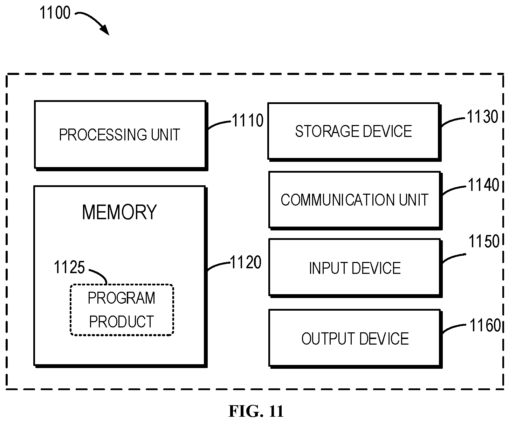

FIG. 11 illustrates a block diagram of an electronic device 1100 in which one or more embodiments of the present disclosure may be implemented. It should be understood that the electronic device 1100 shown in FIG. 11 is merely example and should not constitute any limitation on the functionality and scope of the embodiments described herein. The electronic device 1100 shown in FIG. 11 may be used to implement the terminal device 140 and/or the content management system 120 of FIG. 1.

As shown in FIG. 11, the electronic device 1100 is in the form of a general-purpose computing device. Components of the electronic device 1100 may include, but are not limited to, one or more processors or processing units 1110, a memory 1120, a storage device 1130, one or more communications units 1140, one or more input devices 1150, and one or more output devices 1160. The processing unit 1110 may be an actual or virtual processor and can perform various processes according to programs stored in the memory 1120. In a multiprocessor system, a plurality of processing units executes computer executable instructions in parallel, so as to improve the parallel processing capability of the electronic device 1100.

The electronic device 1100 typically includes a number of computer storage medium. Such media may be any available media that are accessible by electronic device 1100, including, but not limited to, volatile and non-volatile media, removable and non-removable media. The memory 1120 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 1130 may be a removable or non-removable medium and may include a machine-readable medium such as a flash drive, a magnetic disk, or any other medium that can be used to store information and/or data (e. g., training data for training) and that can be accessed within the electronic device 1100.

The electronic device 1100 may further include additional removable/non-removable, volatile/nonvolatile storage medium. Although not shown in FIG. 11, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 1120 may include a computer program product 1125 having one or more program modules configured to perform various methods or actions of various embodiments of the present disclosure.

The communication unit 1140 implements communication with other electronic devices through a communication medium. In addition, functions of components of the electronic device 1100 may be implemented by a single computing cluster or a plurality of computing machines, and these computing machines can communicate through a communication connection. Thus, the electronic device 1100 may operate in a networked environment using logical connections to one or more other servers, network personal computers (PCs), or another network node.

The input device 1150 may be one or more input devices such as a mouse, keyboard, trackball, etc. The output device 1160 may be one or more output devices such as a display, speaker, printer, etc. The electronic device 1100 may also communicate with one or more external devices (not shown) such as a storage device, a display device, or the like through the communication unit 1140 as required, and communicate with one or more devices that enable a user to interact with the electronic device 1100, or communicate with any device (e. g., a network card, a modem, or the like) that enables the electronic device 1100 to communicate with one or more other electronic devices. Such communication may be performed via an input/output (I/O) interface (not shown).

According to an example implementation of the present disclosure, a computer readable storage medium is provided, on which a computer-executable instruction is stored, wherein the computer executable instruction is executed by a processor to implement the above-described method. According to an example implementation of the present disclosure, there is also provided a computer program product, which is tangibly stored on a non-transitory computer readable medium and includes computer-executable instructions that are executed by a processor to implement the method described above.

Aspects of the present disclosure are described herein with reference to flowchart and/or block diagrams of methods, apparatus, devices and computer program products implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is example, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

**Claims**

1. A method for conversion evaluation, comprising:

   causing a first content item related to a first object to be presented at a terminal device corresponding to a content provision platform;
   in response to determining detection of a click behavior for the first content item, causing an assistant content item related to the first object to be presented at the terminal device, the assistant content item at least indicating an entry for performing a conversion behavior for the first object; and
   determining first expected conversion information for the first content item based on click feedback for the entry, the click feedback indicating whether the entry is clicked at the terminal device, the first expected conversion information indicating a probability that the conversion behavior for the first object is expected to be performed.

2. The method of claim 1, wherein the conversion behavior comprises a download behavior on the first object.

3. The method of claim 1, wherein the assistant content item further indicates descriptive information related to the first object.

4. The method of claim 1, wherein causing the assistant content item to be presented comprises:

   determining whether the assistant content item is to be presented at the terminal device based at least on a return constraint for the conversion behavior for the first object; and
   selectively causing the assistant content item to be presented based on the determination.

5. The method of claim 1, further comprising:
   training a conversion prediction model based at least on the first expected conversion information, the conversion prediction model being trained to predict conversion information for a content item related to a given object.

6. The method of claim 5, wherein training the conversion prediction model comprises:

   obtaining second expected conversion information for a second content item, the second content item being related to a second object, and the second expected conversion information being determined based on a probability that the conversion behavior for the second object is performed, and the probability being obtained from a platform other than the content provision platform;
   training a common portion of the conversion prediction model based on the first expected conversion information and the second expected conversion information;
   training a first output portion of the conversion prediction model based on an intermediate output of the common portion and the first expected conversion information; and
   training a second output portion of the conversion prediction model based on the intermediate output of the common portion and the second expected conversion information.

7. The method of claim 5, further comprising:
   predicting a third expected conversion information for a third content item using the trained conversion prediction model, the third content item being related to a third object, and the third expected conversion information indicating a probability that the conversion behavior for the third object is expected to be performed.

8. The method of claim 7, wherein an additional assistant content item is presented in response to detecting a click behavior for the third content item, and the method further comprises:

obtaining drop-off information for the third content item, the drop-off information indicating a probability that the conversion behavior is actually not performed when the third expected conversion information indicates that the conversion behavior for the third object is expected to be performed; and

determining updated conversion information for the third content item based on the third expected conversion information and the drop-off information, the updated conversion information indicating a probability that the conversion behavior for the third object is actually performed.

9. The method of claim 7, further comprising:
determining revenue related information for the third content item based on the updated conversion information and conversion bid information for the third content item, the conversion bid information indicating a bid for a single conversion behavior for the third object.

10. The method of claim 9, wherein obtaining the drop-off information comprises:

obtaining a trained drop-off prediction model; and
determining the drop-off information for the third content item using the drop-off prediction model.

11. The method of claim 10, further comprising training the drop-off prediction model by:

determining a total number of times a conversion behavior for a fourth object is expected to be performed within a time period when a fourth content item related to the fourth object is presented;
determining expected drop-off information for the fourth content item using a to-be-trained drop-off prediction model;
determining, based on the expected drop-off information and the total number of times, a predicted total number of times that the conversion behavior for the fourth object is actually performed within the time period; and
updating the drop-off prediction model based on a difference between the predicted total number of times and an actual total number of times that the conversion behavior for the fourth object is actually performed within the time period.

12. The method of claim 11, wherein an additional assistant content item is presented in response to detecting a click behavior for the fourth content item, and wherein determining the total number of times the conversion behavior for the fourth object is expected to be performed within the time period comprises:

obtaining a plurality of times that a click behavior for an entry indicated by the additional assistant content item is performed at a plurality of time points within the time range;
determining a plurality of conversion return probabilities corresponding to the plurality of time points, a conversion return probability indicating a probability that the number of times the conversion behavior for the fourth object is performed at a corresponding time point has been returned at a latest time point among the plurality of time points; and
determining the total number of times the conversion behavior for the fourth object is expected to be performed within the time period based on the plurality of times and the plurality of conversion return probabilities.

13. A method for conversion evaluation, comprising:

presenting, at a terminal device corresponding to a content provision platform, a first content item related to a first object;
in response to detecting a click behavior for the first content item, presenting an assistant content item related to the first object, the assistant content item at least indicating an entry for performing a conversion behavior for the first object; and
providing click feedback for the entry to a content management system, the click feedback indicating whether the entry is clicked at the terminal device.

14. An apparatus for conversion evaluation, comprising:

a first presentation controlling module configured to cause a first content item related to a first object to be presented at a terminal device corresponding to a content provision platform;
a second presentation controlling module configured to cause, in response to determining detection of a click behavior for the first content item, an assistant content item related to the first object to be presented at the terminal device, the assistant content item at least indicating an entry for performing a conversion behavior for the first object; and

a conversion determining module configured to determine first expected conversion information for the first content item based on click feedback for the entry, the click feedback indicating whether the entry is clicked at the terminal device, the first expected conversion information indicating a probability that the conversion behavior for the first object is expected to be performed.

15. The apparatus of claim 14, wherein the second presentation controlling module comprises:

a determining module configured to determine whether the assistant content item is to be presented at the terminal device based at least on a return constraint for the conversion behavior for the first object; and

a selective presenting module configured to selectively cause the assistant content item to be presented based on the determination.

16. The apparatus of claim 14, further comprising:
a first training module configured to train a conversion prediction model based at least on the first expected conversion information, the conversion prediction model being trained to predict conversion information for a content item related to a given object.

17. The apparatus of claim 16, further comprising:
a first model application module configured to predict a third expected conversion information for a third content item using the trained conversion prediction model, the third content item being related to a third object, the third expected conversion information indicating a probability that the conversion behavior for the third object is expected to be performed.

18. An apparatus for conversion evaluation, comprising:

a first presenting module configured to present, at a terminal device corresponding to a content provision platform, a first content item related to a first object;

a second presenting module configured to present, in response to detecting a click behavior for the first content item, an assistant content item related to the first object, the assistant content item at least indicating an entry for performing a conversion behavior for the first object; and

a feedback providing module configured to provide click feedback for the entry to a content management system, the click feedback indicating whether the entry is clicked at the terminal device.

19. An electronic device comprising:

at least one processing unit; and

at least one memory, the at least one memory being coupled to the at least one processing unit and storing instructions for execution by the at least one processing unit, the instructions, when executed by the at least one processing unit, cause the device to implement the method of any one of claims 1-12 or the method of claim 13.

20. A computer-readable storage medium having a computer program stored thereon, the computer program, when executed by a processor, implements the method of any one of claims 1-12 or the method of claim 13.

**FIG. 1**

**FIG. 2**

301

Follow **For You**

#APP XX

310

#APP XX

Bring New Effect
Welcome to download

312

Download

**FIG. 3A**

301

Follow **For You**

#APP XX

310

#APP XX

Bring New Effect
Welcome to download

312

Download

**FIG. 3B**

303

**APP XX**

App icon

YY Company

322

Download (20MB)

Banner Info. on App XX

Brief Intro. about App XX

324

Download (20MB)

**FIG. 3C**

304

Search

**APP XX**

App icon

YY Company

Download   Share

200 reviews

Rating:★★★★☆

**Developer**   **Size**

XX Org.   **20MB**

APP XX
Page
Screenshot 1

APP XX
Page
Screenshot 2

**FIG. 3D**

FIG. 4

422

EXPECTED CONVERSION INFO.

EXPECTED CONVERSION INFO.

512

522

FIRST OUTPUT PORTION

SECOND OUTPUT PORTION

INTERMEDIATE FEATURE INFO.

510

COMMON PORTION

MODEL INPUT

**FIG. 5**

**FIG. 6**

700

### 710
CAUSE A FIRST CONTENT ITEM RELATED TO A FIRST OBJECT TO BE PRESENTED AT A TERMINAL DEVICE CORRESPONDING TO A CONTENT PROVISION PLATFORM

### 720
DETECT CLICK BEHAVIOR FOR FIRST CONTENT ITEM?

YES

### 730
CAUSE AN ASSISTANT CONTENT ITEM RELATED TO THE FIRST OBJECT TO BE PRESENTED AT A CONTENT PROVISION PLATFORM

### 740
DETERMINE FIRST EXPECTED CONVERSION INFORMATION FOR THE FIRST CONTENT ITEM BASED ON CLICK FEEDBACK FOR THE ENTRY

**FIG. 7**

800

### 810
PRESENT A FIRST CONTENT ITEM RELATED TO A FIRST OBJECT

### 820
DETECT CLICK BEHAVIOR FOR FIRST CONTENT ITEM?

YES

### 830
PRESENT AN ASSISTANT FIRST CONTENT ITEM RELATED TO THE FIRST OBJECT

### 840
PROVIDE CLICK FEEDBACK FOR THE ENTRY TO A CONTENT MANAGEMENT SYSTEM

**FIG. 8**

900

910

FIRST PRESENTATION
CONTROLLING MODULE

920

SECOND PRESENTATION
CONTROLLING MODULE

930

CONVERSION DETERMINING
MODULE

**FIG. 9**

1000

1010

FIRST PRESENTING MODULE

1020

SECOND PRESENTING MODULE

1030

FEEDBACK PROVIDING MODULE

**FIG. 10**

1100

PROCESSING UNIT ——1110

MEMORY

1125

PROGRAM PRODUCT ——1120

STORAGE DEVICE ——1130

COMMUNICATION UNIT ——1140

INPUT DEVICE ——1150

OUTPUT DEVICE ——1160

**FIG. 11**

<div align="center">

**INTERNATIONAL SEARCH REPORT**

</div>

| | International application No. |
|---|---|
| | **PCT/CN2023/099249** |

| A. | CLASSIFICATION OF SUBJECT MATTER |
|---|---|
| | G06Q10/06(2023.01)i |

According to International Patent Classification (IPC) or to both national classification and IPC

| B. | FIELDS SEARCHED |
|---|---|

Minimum documentation searched (classification system followed by classification symbols)

IPC: G06Q

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, CNKI, IEEE: 转化, 率, 预测, 估计, 预估, 评估, 评价, 模型, 点击, 下载, conversion, rate, predict, model, click, download

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114971386 A (BEIJING YOUZHUJU NETWORK TECHNOLOGY CO., LTD.) 30 August 2022 (2022-08-30)<br>claims 1-20 | 1-20 |
| X | US 2018150874 A1 (FACEBOOK, INC.) 31 May 2018 (2018-05-31)<br>abstract, and description, paragraphs [0014]-[0048] | 1-5, 7, 13-20 |
| A | CN 111401963 A (ALIPAY (HANGZHOU) INFORMATION TECHNOLOGY CO., LTD.) 10 July 2020 (2020-07-10)<br>entire document | 1-20 |
| A | CN 106844178 A (TENGYUN TIANYU TECHNOLOGY (BEIJING) CO., LTD.) 13 June 2017 (2017-06-13)<br>entire document | 1-20 |
| A | CN 111125519 A (TENCENT TECHNOLOGY (SHENZHEN) CO., LTD.) 08 May 2020 (2020-05-08)<br>entire document | 1-20 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 August 2023** | **23 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/099249** |

| Patent document cited in search report | | | Publication date (day/month/year) | Patent family member(s) | | | Publication date (day/month/year) |
| --- | --- | --- | --- | --- | --- | --- | --- |
| CN | 114971386 | A | 30 August 2022 | None | | | |
| US | 2018150874 | A1 | 31 May 2018 | US | 2020265471 | A1 | 20 August 2020 |
| | | | | US | 11610225 | B2 | 21 March 2023 |
| | | | | US | 10664866 | B2 | 26 May 2020 |
| CN | 111401963 | A | 10 July 2020 | None | | | |
| CN | 106844178 | A | 13 June 2017 | None | | | |
| CN | 111125519 | A | 08 May 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210693437